# EUROPEAN PATENT SPECIFICATION

(11) **EP 1 096 593 B1**
(45) Date of publication and mention of the grant of the patent: **13.04.2011**
(21) Application number: 00122529.1
(22) Date of filing: 16.10.2000
(51) Int. Cl.: H01M 10/48, G01F 23/292

(54) **Control and signal device for batteries**
Steuer- und Signalvorrichtung für Batterien
Dispositif de controle et de signalisation pour batteries

(30) Priority: 26.10.1999 IT MI992234
(43) Date of publication of application: 02.05.2001
(73) Proprietor: Fabbrica Italiana Accumulatori Motocarri Montecchio - F.I.A.M.M. S.p.A., 36075 Montecchio Maggiore (Vicenza) (IT)
(72) Inventor: Arduini, Carlo, 17028 Spotorno (Savona) (IT); Morrone, Luciano, 17043 Carcare (Savona) (IT)
(74) Representative: Lecce, Giovanni

(56) References cited:
- WO-A-85/00301
- DE-A- 2 920 199
- DE-A- 3 243 839
- DE-C- 4 319 922
- PATENT ABSTRACTS OF JAPAN vol. 007, no. 101 (P-194), 28 April 1983 (1983-04-28) & JP 58 026226 A (FUJI DENKI SOUGOU KENKYUSHO:KK;OTHERS: 01), 16 February 1983 (1983-02-16)

## Description

The present invention relates to a control and signal device for batteries.

More particularly, the present invention relates to a device suitable for the systematic survey of the level of the electrolyte and the charge conditions of the starter batteries installed on motor-vehicles, or those utilized for traction or stationary batteries.

As is known, batteries are utilized for several aims and, in the car field, they constitute the essential element for the storage and output of electric energy. Such batteries are of the so-called secondary type, re-chargeable, used as direct current generators whenever many discharging-charging cycles are required or whenever repeated, intense and instantaneous currents are needed.

The batteries used in the car field are conventionally lead-acid batteries, a definition due to the fact that the electrolyte is substantially diluted sulfuric acid and that the electrolytes or plates are mainly made from lead.

The efficiency of the batteries, with particular but not exclusive reference to those employed in motor-cars, is of basic importance, especially as it is correlated to motor start up. A systematic monitoring of such batteries would be therefore a solution suitable to prevent deficit conditions that generally occur without any warning.

With regard to this, systematic controls on these batteries are non generally carried out by users, especially on the so-called sealed batteries that are widespread. In these batteries, in fact, it is not possible to check the electrolyte level, its density and temperature, which as is known are associated to the charge state of said batteries, and therefore to their efficiency.

Opto-mechanical devices are known that allow to control the density of the liquid or electrolyte that is present in a battery and to evaluate therefore, at least partly, the efficiency state of the same.

These devices of the ON/OFF type cannot be calibrated, and often they do not depend on the temperature, and involve the necessity of a visual and direct inspection of the battery, generally located in the motor compartment.

The same result can be obtained by means of specific refractometers, i.e. autonomous and generally very expensive instruments that measure the variation in the refraction index of a liquid or a solution, due, for instance, to concentration variations of the components and the temperature.

Apart from the difficulty of the survey - which, among other things, is limited to one only parameter, i.e. the density of the liquid - do not allow the systematic control of the optimal conditions of the battery, in the sense of a constant monitoring of the electrolyte level and the charge state.

DE 43 19 922 C discloses a detector for the electrolyte levels of lead-acid storage battery comprising an elongated body of a radiation transparent material immersed in the electrolyte, a radiation emitter and a radiation receiver of the radiation which is internally reflected by said body, the intensity of the reflected radiation being different depending on whether the body is immersed or not in the electrolyte. DE 32 43 839 discloses a similar arrangement for measuring the level of liquids in containers (particularly in motor vehicles).

Both WO 85/00301 and JP 58 026226 disclose arrangements of the above type for detecting the level the of liquids in containers.

Object of this invention is to obviate the above drawbacks.

More particularly, object of the present invention is to provide a control and signal device suitable for the continuous monitoring of batteries to survey the charge state, and the level and temperature of the electrolyte.

A further object of the present invention is to provide a device as defined above, suitable to be connected to an indicator or a display for the visualization of the charge state and the electrolyte level of the batteries.

A further object of this invention is to provide a device wherein the recording of the charge state and the level and temperature of the electrolyte is made through one only operating unit or probe.

Another further object of the present invention is to provide a device suitable to ensure the precision of the recording of the electrolyte level, being affected by possible alterations due to the temperature of said electrolyte.

In its more general aspect, the present invention allows to obtain these and other objects that will be apparent thanks to the following description, by means of a control and signal device for batteries claimed in claim 1.

The shaped body may be made from any material that is not etched by the sulphuric acid present in the electrolyte, such as for instance glass, crystal, polycarbonate, etc.; the latter being the preferred material.

The lower end or base of the shaped body may be flat or have preferably a faceted profile, with symmetrically oriented specular surfaces with respect to the axis of the body, along the opposite sides. Said surfaces are in number of two, a first upper surface and a second lower surface, differently inclined with respect to the axis of the body.

The first upper surface is inclined with respect to the axis of the body at an angle such as to ensure an optimal transfer to the receiver of the portion of incident ray beam, when the body is immersed in the air, while such transfer is practically null when the body is immersed in a liquid having a refraction index greater that one. The second lower surface is inclined with respect to the axis of the body at an angle such that the incident portion of the ray beam collected by the receiver has an intensity variable in an univocal manner with the density of the electrolyte.

Said surfaces may be connected to each other through a rectilinear connecting surface perpendicular to the axis of the body or through at least an inclined connecting surface. Preferably, the connecting surfaces are in number of two, either inclined or symmetrically oriented and converging on the body axis.

The constructive and functional characteristics of the control and signal device for batteries of the present invention will be better understood thanks to the following description, wherein reference is made to the figures of the attached drawings that show some preferred embodiments expounded by way of non limiting example, and wherein:
Figure 1 shows the schematic front view of a section of the device of the present invention according to a first embodiment thereof;
Figure 2 shows the schematic front view of a section of the device of the present invention according to a second embodiment thereof;
Figure 3 shows the schematic front view of a section of the device of the present invention according to a third embodiment thereof; and

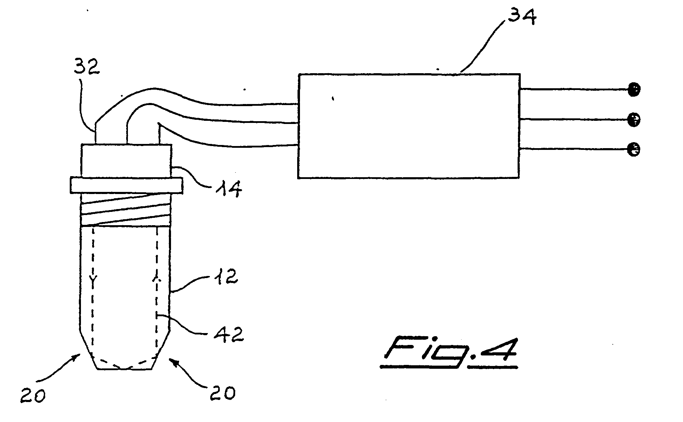

Figure 4 shows the schematic front view of a section of the same device, connected to an elaboration unit of the values surveyed by the same.

For the sake of clearness, said elaboration unit is shown outside said device, while the same may be housed in the inside of the car gearcase or in some other suitable location.

With reference to the aforementioned figures, the control and signal device for batteries, indicated as a whole by 10, comprises a shaped body 12 from transparent material with a refraction index different with respect to the one of the electrolyte, for instance polycarbonate, provided at an end with a plug 14 whereto an emitter 16 of infrared light ray beams and a receiver 18 of said rays are fixed. Said emitter 16 and receiver 18 are located in an opposite position with respect to the axis of body 12.

Body 12, in the preferred embodiment of the figures, has a plate-like, polygonal, irregular development of a limited thickness comprised, by way of example, between 1 and 10 mm; for the sake of assembly easiness the width of said body is preferably equal to or smaller than the inner diameter of plug 14, while its height or longitudinal extension is such that at least the end opposite to the one provided with a plug is immersed in the electrolyte or near to the minimum L level of the electrolyte present in the battery.

Body 12 and plug 14 form preferably one only element that can be advantageously located in one of the seats of the conventional plugs that are present on the lids of the batteries or in one of the special housings of devices that are commonly called "magic eyes". For this purpose, plug 14 is provided with a suitable external threading 14', or a sealing ring nut 14'' for pressure insertion with an interposed gasket 15.

In the lowest part, intended for coming in touch with the electrolyte, body 12 has a faceted profile, defined by opposite and specular portions 20, 20', each of which is formed by a first upper surface 22 and a second lower surface 24 having a different inclination and that develop with an angular orientation that increases in the direction of the longitudinal axis of said body. In particular, the first upper surface 22 of portions 20 and 20' is oriented towards said axis at an angle such as to ensure an optimum transfer to the receiver 18 of the portion of the light beams incident on said surface 22 when the probe is immersed in the air, while the transfer becomes practically null when the probe is immersed in a liquid with a refraction index greater than 1. The second lower surface 24 is inclined with respect to the body axis at an angle such that the portion of the ray beam incident on said receiver 18 has an intensity variable in an univocal manner with the density of the electrolyte.

According to an embodiment wherein the length of body 12 is of 45 mm, its width is of 13 mm and the distance between emitter 16 and receiver 18 is comprised between 5 and 15, preferably between 6 and 10 mm, the angle of the first surface 22 is comprised between 41° and 45°, and preferably between 43° and 44°; in proximity, with or without solution of continuity, a further intermediate segment (not shown) differently oriented. The second surface 24 develops at an angle, with respect to the same longitudinal axis of body 12, and has an inclination such that the portion of the beam incident on said surface 24 and collected by the receiver 18 has an intensity variable in an univocal manner with the density of the electrolyte. For the above embodiment the inclination angle of the second surface 24 is comprised between 25° and 32° and preferably between 26° and 31°.

The presence of two differently inclined surfaces 22 and 24 involves three reflections that determine, in practice, an increase of the useful signal by a factor of 8 with respect to one only reflection.

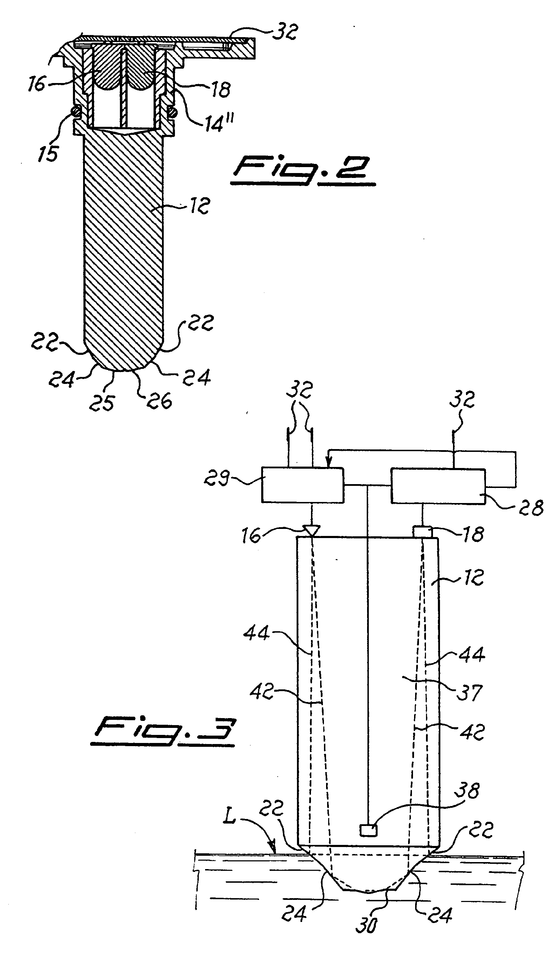

The second opposite surfaces 24 may be connected between each other or through a rectilinear connection system 30, perpendicular to the vertical axis of said body, or through at least a symmetrically oriented connection surface converging on the axis of body 2. Preferably, the connection surfaces are in number of two, 25, 26, as shown in Figure 2, and inclined at an inclination angle preferably comprised between 14° and 20°, more preferably between 16° and 18°.

The choice of the inclination angles of the surfaces, the dimensions of the body and the distance between the emitter and the receiver allow to obtain, in the aforesaid case in point, an optimal recording of the charge state of the batteries in the density interval of the electrolyte at issue comprised between 1.33 (entirely charged battery) and 1.13 (substantially discharged battery).

In order to further improve the recording of the charge state of the battery and to make it insensitive to the temperature variations and to the initial charge level of the battery, the signal outgoing from the receiver 18 can be picked up by a conditioner 28 in which the temperature signal coming from sensor 38 joing.

The conditioner 28 retroacts the feeder of the emitter 16 by making linear, in this way, the response of the device.

A compensation is thus obtained both of the temperature and as a function of the charge atate of the battery, contemporaneously and directly in the device.

The shaped body 12 is preferably made from polycarbonate which, as is known, has a refraction different index and greater with respect to that of the liquid or electrolyte present in the battery, in order to ensure the recording function specified in the following.

Light emitter 16 is located in plug 14, in correspondence of the upper end of body 12, along a central-lateral zone of the same, and is advantageously constituted of an infrared ray LED, of a type known *per se*. Receiver 18 of the light developed by emitter 16, also of a known type, abuts in plug 14 in correspondence of the upper end of body 12 along the opposite central-lateral zone of said plug.

To the upper portion of plug 14, electric terminals 32 connected on the one side to said emitter 16 and receiver 18, for instance through suitable electronic circuitries, and on the other hand to an electronic circuit indicated by 34 in Figure 2, suitable to implement the algorithms of elaboration of the electronic signal generated to determine the efficiency state of the battery, i.e., as will be specified later on, the electrolyte level, the concentration, the temperature and the charge state.

The control of the electrolyte level is of the essential, as, if the level should be kept to low for too long a time, the efficiency of the battery would significantly decrease, and besides the etching by the acid of the zone wherein the plate lugs engage in the connecting bridge would be spurred, with very severe risks of damaging entirely the battery and even of a possible explosion of the same.

For the control of the charge state and therefore of the energy available in the battery, the refraction index of the battery is only tied to the density, and the charge state is, in a first approximation, a univocal function of the density and temperature. The difference between the refraction indexes between body 12 and the circumscribing electrolyte determine the light fraction generated by emitter 16 that is reflected and collected by receiver 18, i.e. the light fraction that is refracted and then dispersed.

To sum up, the control circuit of the device can determine the charge state of the battery through the exploiting of the light signal modulated by the density and the signal generated by the temperature sensor.

According to a further characteristics of the present invention, body 12 can be circumscribed at least partly by a permeable envelope 36. that forms a controlled porosity covering or jacket. Preferably, said envelope 36 is formed by a net from polypropylene, fiberglass, cellulose or the like, and has the aim of protecting body 12 from dirt particles while allowing the electrolyte to pass freely, and of preventing the formation on the same, especially in the battery recharge stage, micro-bubbles that would alter the correct recording of the parameters, interfering with the light rays developed by emitter 16 and reflected along body 12. The envelope or net 36 also prevents the possible temporary adhesion of liquid drops on body 12, along the zones concerned by the passage of the light ray beams in case of low level of the electrolyte. Said envelope 36, fixed to plug 14 by mechanical means, adhesives or ultrasounds, remains slightly distant from the surface of body 12 along the whole development, the possibility that the same might adhere to the same in some zones being not excluded, except in any case for lengths 22.

Instead of a net 36 that forms a continuous and complete envelope about body 12, there may be employed one or more impregnable backfills along said body or a lower cap that supports and keeps in touch with the probe body, the synthetic fibers, as for instance rock wool, permeated by the electrolyte analyzed by the light beam.

As said above, the correct evaluation of the charge state through the measurement of the density of the electrolyte also involves the determination of the temperature of the same. To this aim, in the inside of body 12 a cavity 37 is formed, suitable to house a temperature sensor 38, connected in a known manner, to one or more of the electric terminal 32 and board 34.

The longitudinal extension of sensor 38 in body 12 is preferably limited, i.e. such as to be shorter than the faceted portions 20, 20' of said body. Through the intervention of the temperature sensor 38, the values surveyed may therefore be corrected, i.e. multiplied by a corrective factor through a suitable multiplying apparatus incorporated in device 10.

Preferably, in order to prevent the use of such an apparatus, the temperature sensor 38 interacts with the circuit of a conventional stabilizer provided for the working of emitter 16 and receiver 18, varying the intensity of the light of said emitter according to the temperature of the battery liquid, making therefore a so-called "back-reaction" correction.

Device 10 of the present invention works as follows. Said device is positioned in the battery, for instance in the seat or one of the conventional lid plugs or a like special aperture. The device may be placed in a horizontal position or an inclined position, on condition that the lower end of body 12 abuts in proximity of the plates, remaining far from the same by a length equal, by way of orientation, to about mm, with a new and charged battery, Level L of the electrolyte surmounts the first inclined upper surface 22 of the opposite portions 20, 20' of said body 12.

Emitter 16 and receiver 18 are electrically connected in a known manner, through one or more of terminals 32, to the electronic board 34.

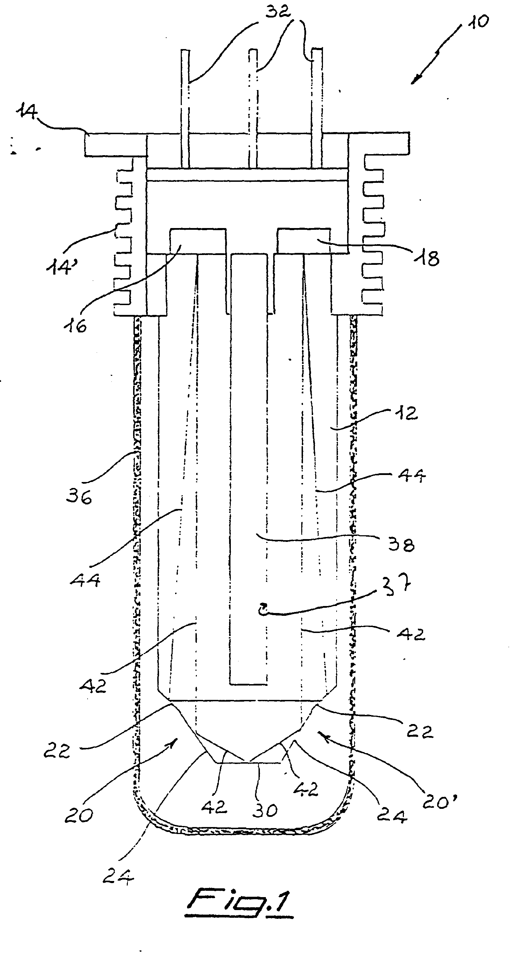

The light beam developed by emitter 16 may be schematically thought as being formed by two beams, exemplified respectively by the rays indicated by 42 and 44 which form the optical axes. The first beam 42 is vertically oriented and is approximately and on the average parallel to the longitudinal axis of body 12 in correspondence of portions 20 that define the facets. Said beam strikes one of the second lower surfaces 24 of portion 20 underlying emitter 16, is deviated or reflected a first time downwards where it reaches the base. If the base is flat 30, as shown in Figure 1, the beam is deviated from said base 30 a second time towards the other opposite surface 24 of portion 20'. If, on the contrary, the base is formed by two inclined connection surfaces 25 and 26, the beam undergoes two subsequent deviations, one on each surface. Lastly, beam 42 makes a further and last deviation upwards and, orienting substantially parallel to the longitudinal axis of beam 12, reaches receiver 18. During said at least three deviations or reflections, unavoidable because of the faceted configuration of the lower portions 20, 20' of body 12, beam 42 interacts as many times with the electrolyte present in the battery, amplifying therefore the variations in the reflected light due to the differences of the refraction indexes. As reflection is univocally associated to the density of the acid solution, a relevant value of the signal determines, which is collected by receiver 18 and elaborated by board 34. Such signal, correlated to the acid density, allows therefore to obtain a precise value on the charge state of the battery, as specified above.

From the same light source constituted by emitter 16, a second beam 44 develops, whose angle is suitably oriented.

Said beam 44 strikes portion 20 in the upper surface 22 and, depending on whether the electrolyte is present, is differently reflected horizontally on the opposite upper surface 22 of portion 20'; from this position, beam 44 is further and in a like manner deviated upwards where it reaches receiver 18. Beam 44 undergoes therefore two reflections in the liquid constituting the electrolyte, whose optimum level abuts above portions 20, 20' of body 12.

As a consequence of such reflections, beam 44 sends receiver 18 a signal which is elaborated by board 34. If the level of the acid solution is high, for instance higher than the first upper surfaces 22 of portions 20, 20' of body 12, beam 44 scatters without substantially reflecting and does not return to receiver 18 and the probe will only answer to the signal coming from the second part of the beam that carries the information on acid density. If, instead, the liquid is lower than the first upper surfaces 22 of portions 20, 20' of body 12, beam 44 is entirely reflected from said first surfaces 22, sending a very intense light signal to receiver 18 (summation of the level signal and the density signal), which in its turn will unequivocal signal the insufficient level of the electrolyte.

As mentioned above, during the survey of the solution density through ray 42, the temperature sensor 38 advantageously steps in and, through suitable parameters stored in board 34, supplies the correctives by varying the intensity of the ray developed by emitter 16.

The algorithms of signal(s) elaboration can advantageously be implemented in the electronic circuitries, known *per se*, of the vehicle. Circuitries determine the state of the alarms through special instruments of optical or acoustic signals, located in the instrumentation of said vehicle.

The device of the invention may be provided with a timer to perform the survey of the battery in a planned manner and may also be connected to an apparatus that stores and memorizes the data systematically or periodically surveyed in order to interpret the wear state of the battery.

Other possible variants include the shape of the plug and the number of pieces of the probe, the geometry and dimensions, the materials and the mutual positioning of segments 22, 24, the positioning of the data elaboration board that may be placed in body 12, externally, in the circuitries or other suitable position.

The geometry of body 12 as defined above is the preferred one but there cannot be excluded the possibility that said body be provided with one only multi-function facet, i.e. intended for the survey of the density and level of the electrolyte.

Terminals 32 may be integrated in plug 14 like connectors.

As can be inferred from the above, the advantages achieved by the invention are obvious.

The control and signal device for batteries of the present invention allows to monitor continuously the charge state of the battery and the associated electrolyte level, providing adequate electric signals to be connected to instruments or displays.

The possibility of performing such surveys through one only light source with the emission of two beams having different orientation and form, is particularly advantageous. Besides, the presence on body 12 of a net or envelope 36 of total or partial protection prevents the danger of altered surveys due to the deposit of dirt particles or microbubbles of gas generated in the solution. Thanks to the use of infrared light rays and the wavelength matching between the emitter and the receiver, the device of the invention is not affected by the ambient light and can therefore be utilized also for batteries having an envelope from transparent plastic material.

## Claims

1. A control and signal device (10) for batteries, especially for starter batteries of motor-vehicles, comprising electrodes or lead plates immersed in an electrolyte, said device comprising:
- a shaped body (12) having an upper part and a lowest part and made from transparent material, with a refraction index different from the one of said electrolyte, provided in the upper part with a support or plug (14) that can be engaged in the container and/or the lid of the battery and with the lowest part having a faceted profile;
- in the upper part of said shaped body (12); an emitter (16) of infrared light ray beams (42, 44) and a receiver (18) of the infrared light ray beams reflected from said lowest part having a faceted profile; and
- electronic means (34) connected to said emitter (16) and said receiver (18) for reading and elaborating the signal generated by the receiver (18) of the reflected infrared light rays,
**characterized in that**
said lowest part having a faceted profile is defined by opposite and specular portions (20,20') each of which is formed by a first upper surface (22) and a second lower surface (24) located closer to the lowest part of the said shaped body (12) than the first upper surface (22) having a different inclination to a longitudinal axis extending from the said upper part to the said lowest part of the said shaped body (12),
whereby the infrared light ray beams reflected from said first upper surfaces (22) exhibiting a higher inclination to the longitudinal axis of the device than the second lower surface (24), contain information concerning a drop of the electrolyte level below a critical value,
and the infrared light ray beams reflected from said second lower surfaces (24) exhibiting a lower inclination to the longitudinal axis of the device, contain information concerning the acid concentration.

2. The device according to claim 1, **characterized in that** said first higher surface (22) of said portions (20,20') of body (12) developes, with respect to the longitudinal axis of said body (12), at an angle such as to ensure an optimal transfer to receiver (18) of the beam incident on said surface (22) when said lowest part is immersed in the air, while the energy transfer becomes practically null when said lowest part is immersed in a liquid having a refraction index greater than 1.

3. The device according to claim 2, **characterized in that** said second lower surface (24) of said portions (20,20') of body (12) develops, with respect to the longitudinal axis of said body, with an inclination such that the portion of the beam incident on said lower surface (24) and received by said receiver (18) has an intensity variable in an univocal manner with the density of the electrolyte.

4. The device according to any of the preceding claim 3, **characterized in that** the said second lower surfaces (24) are connected with each other through a rectilinear connection surface (30) perpendicular to the vertical axis of body (12).

5. The device according to any of the preceding claims 1 or 2, **characterized in that** the said second lower surfaces (24) are connected with each other through at least a symmetrically oriented connection surface converging on the axis of said body (12).

6. The device according to any of the preceding claims 1 or 2, **characterized in that** said second lower surfaces (24) are connected with each other through two inclined connection surfaces (25, 26) symmetrically oriented and converging on the axis of body (12).

7. The device according to any of the preceding claims, **characterized in that** said body (12) is provided with a longitudinally extending cavity (37) and a temperature sensor (38) located in said cavity (37) at a height lower than said faceted portion (20,20') of body (12), and connected to the electronic means (34).

8. The device according to any of the preceding claims, **characterized in that** said shaped body (12) is made from polycarbonate having a refraction index greater than that of the electrolyte.

9. The device according to any of the preceding claims, **characterized in that** said body (12) has a width equal to or shorter than the inner diameter of said plug (14) and a height or longitudinal extension such that the faceted end is immersed in the electrolyte present in the battery and the minimum level L surmounts the first inclined upper surface (22).

10. The device according to claim 7, **characterized in that** it also comprises a conditioner (28), that picks up and elaborates the signal coming from the receiver (18) or from the receiver (18) and from the temperature sensor (38) and retroacts a feeder (29) that feeds said signal to said emitter (16).

11. The device according to any of the preceding claims, **characterized in that** said body (12) is at least partly circumscribed by a preamble envelope (36), constituted of a net of sintered material, partly spaced from said body, said envelope being fixed to said plug (14).

12. The device according to any of the preceding claims, **characterized in that** at least a backfill or a cap from synthetic fibers is located at least in correspondence of the lower part of said body (12).

13. The device according to any of the preceding claims, **characterized in that** said light emitter (16) is located in plug (14) in correspondence of the upper end of said body (12) along a central-lateral zone, and said receiver (18) is located in the opposite central-lateral zone with respect to the axis of said plug (14), and the electric terminals that connect said emitter (16) and said sensor (18) to the electronic circuit (34) are fixed to said upper end of said plug (14).

14. The device according to any of the preceding claims, **characterized in that** the electric signals received by receiver (18) and elaborated by board (34) are implemented in the electronic circuitries of the vehicle whereon the battery for the optical and/or acoustic survey of the state of the alarm is installed.

## Patentansprüche

1. Eine Kontroll- und Signaleinrichtung (10) für Batterien, insbesondere für Starterbatterien von Kraftfahrzeugen, mit Elektroden oder Bleiplatten in eine Elektrolytlösung getaucht, wobei die Vorrichtung folgendes aufweist:
- ein Formkörper (12) mit einem Oberteil und einem unteren Teil aus transparentem Material mit einem Brechungsindex, der von dem des Elektrolyts abweicht, im oberen Teil mit einem Halter oder Stecker (14) versehen, der in den Behälter und/oder den Batteriedeckel eingesetzt werden kann und mit Ausführung des untersten Teils in facettierter Form;
- ein Sender (16) von IR-Lichtstrahlen (42, 44) im oberen Teil des Formkörpers (12) und einem Empfänger (18) der IR-Lichtstrahlen, die vom untersten Teil mit facettierten Profil reflektiert werden; und
- elektronische Mittel (34), verbunden mit dem genannten Sender (16) und Empfänger (18) zum Lesen und Verarbeiten des durch den Empfänger (18) der reflektierten IR-Lichtstrahlen generierten Signals, **dadurch gekennzeichnet, dass** der unterste Teil mit facettiertem Profil durch gegenüberliegende und spiegelverkehrte Abschnitte definiert ist (20, 20'), die jeweils durch eine erste untere Fläche (22) und eine zweite untere Fläche (24) gebildet werden, die sich näher an der tiefsten Stelle des genannten Formkörper (12) befindet, und die eine andere Neigung gegenüber der Längsachse vom genannten Oberteil zum genannten Unterteil des genannten Formkörper (12) aufweisen,
wobei die IR-Lichtstrahlen von den genannten ersten oberen Flächen (22) reflektiert werden, die eine größere Neigung zur Längsachse des Geräts als die zweite untere Fläche (24) aufweisen, mit Informationen über einen Abfall des Elektrolytpegels unter einen kritischen Wert, und die reflektierten IR-Lichtstrahlen von den genannten unteren Flächen (24) mit einer kleineren Neigung zur Längsachse des Geräts Informationen über die Säurekonzentration enthalten.

2. Die Vorrichtung gemäß Anspruch 1, **dadurch gekennzeichnet, dass** die genannte erste obere Fläche (22) der genannten Abschnitte (20, 20') des Körper (12) sich in Bezug auf die Längsachse des Körpers (12) in einem solchen Winkel entwickelt, um eine optimale Übertragung des Strahlungsanteils auf genannte Fläche (22) an den Empfänger (18) zu ermöglichen, wenn der unterste Teil in Luft gehüllt ist, während die Energieübertragung nahezu null ist, wenn der unterste Teil in eine Flüssigkeit mit einem Brechungsindex größer als 1 getaucht ist.

3. Die Vorrichtung gemäß Anspruch 2, **dadurch gekennzeichnet, dass** die genannte erste untere Fläche (24) der genannten Abschnitte (20, 20') des Körper (20) sich in Bezug auf die Längsachse des Körpers (12) in einem solchen Winkel entwickelt, dass der Strahlungsanteils auf die genannte untere Fläche (24), empfangen vom genannten Empfänger (18) eine Intensität besitzt, die sich auf eindeutige Weise in Abhängigkeit der Elektrolytedichte verändert.

4. Die Vorrichtung gemäß dem vorhergehenden Anspruch 3, **dadurch gekennzeichnet, dass** die zweiten unteren Flächen (24) miteinander durch eine geradlinige Verbindungsfläche (30) senkrecht zu der vertikalen Achse des Körpers (12) verbunden sind.

5. Die Vorrichtung gemäß einem der vorhergehenden Ansprüche 1 oder 2, **dadurch gekennzeichnet, dass** die zweiten unteren Flächen (24) mindestens durch eine symmetrisch ausgerichtete Verbindungsfläche, die mit der Achse des genannten Körpers (12) konvergiert, verbunden sind.

6. Die Vorrichtung gemäß einem der vorhergehenden Ansprüche 1 oder 2, **dadurch gekennzeichnet, dass** die zweiten unteren Flächen (24) mindestens durch zwei geneigte Verbindungsflächen (25, 26), die symmetrisch ausgerichtet sind und mit der Achse des genannten Körpers (12) konvergieren, verbunden sind.

7. Die Vorrichtung gemäß einem der vorhergehenden Ansprüche, **dadurch gekennzeichnet, dass** der genannte Körper (12) mit einem längs verlaufenden Hohlraum (37) und einem Temperatursensor (38) in genanntem Hohlraum (37) versehen ist, in einer Höhe niedriger als der facettierte Teil (20, 20') des Körpers (12) und mit den elektronischen Mitteln (34) verbunden

8. Die Vorrichtung gemäß einem der vorhergehenden Ansprüche, **dadurch gekennzeichnet, dass** der genannte Formkörper (12) aus Polykarbonat besteht, mit einem Brechungsindex, der größer als der des Elektrolyten ist.

9. Die Vorrichtung gemäß einem der vorhergehenden Ansprüche, **dadurch gekennzeichnet, dass** der genannte Körper (12) eine Breite besitzt, die gleich oder kürzer als der innere Durchmesser des genannten Steckers (14) ist und eine solche Höhe oder Längsausdehnung besitzt, dass das facettierte Ende in das Elektrolyt in der Batterie eintaucht und der Mindestpegel L die erste geneigte obere Fläche (22) überragt.

10. Die Vorrichtung gemäß Anspruch 7, **dadurch gekennzeichnet, dass** es auch einen Verstärker (28) umfasst, der das Signal vom Empfänger (18) oder vom Empfänger (18) und vom Temperatursensor (38) empfängt und zu einem Feeder (29) zurückwirkt, der das Signal zum genannten Sender (16) sendet.

11. Die Vorrichtung gemäß einem der vorhergehenden Ansprüche, **dadurch gekennzeichnet, dass** der genannte Körper (12) zumindest teilweise durch eine vorausgehende Hülle (36) umschrieben ist, gebildet aus einem Netz aus gesintertem Material, teilweise zum Körper distanziert, wobei die genannte Hülle am genannten Stecker (14) befestigt ist.

12. Die Vorrichtung gemäß einem der vorhergehenden Ansprüche, **dadurch gekennzeichnet, dass** sich zumindest ein Hinterfüllung oder eine Kappe aus Synthetikfasern im des unteren Teils des genannten Körpers (12) befindet.

13. Die Vorrichtung gemäß einem der vorhergehenden Ansprüche, **dadurch gekennzeichnet, dass** der genannte Lichtsender (16) sich im Stecker (14) befindet, entsprechend des oberen Endes des genannten Körpers (12), entlang einer zentral-lateralen Zone, und der genannte Empfänger (18) ist in der entgegengesetzten zentral-lateralen Zone in Bezug auf die Achse des genannten Steckers (14) positioniert, und die elektrischen Anschlüsse, die den genannten Sender (16) und den genannten Sensor (18) mit der elektronischen Schaltung (34) verbinden, sind mit dem oberen Ende des genannten Steckers (14) verbunden.

14. Die Vorrichtung gemäß einem der vorhergehenden Ansprüche, **dadurch gekennzeichnet, dass** die elektrischen vom Empfänger (18) empfangenen und von der Platine (34) verarbeiteten Signale in die elektronischen Schaltungen des Fahrzeugs implementiert werden, worauf die Batterie für den optischen und/oder akustische Überwachung des Alarmstatus installiert ist.

## Revendications

1. Un dispositif de contrôle et signalisation (10) pour batteries, en particulier pour des batteries de démarrage pour des véhicules à moteur, qui ont des électrodes ou des plaques de plomb immergées dans un électrolyte, ledit dispositif se composant de:
- un corps profilé (12) ayant une partie supérieure et une partie inférieure en matériau transparent avec un index de réfraction différent de celui dudit électrolyte, muni dans sa partie supérieure d'un support ou d'un bouchon (14) qui peut être inséré dans le conteneur et / ou le couvercle de la batterie et ayant la partie inférieure avec un profile à facettes ;
- Dans la partie supérieure dudit corps profilé (12), un émetteur (16) de rayons infrarouges (42, 44) et un récepteur (18) de rayons infrarouges réfléchis par la susdite partie inférieure ayant un profile à facettes ; et
- des dispositifs électroniques (34) reliés au dit émetteur (16) et récepteur (18) pour lire et élaborer le signal produit par le récepteur (18) des rayons infrarouges réfléchis, **caractérisé par** le fat que ladite partie inférieure ayant un profile à facettes est formée de portions (20, 20') opposées et spéculaires chacune desquelles comporte une première surface supérieure (22) et une deuxième surface inférieure (24) situées à proximité de l'extrémité inférieure dudit corps profilé (12) ayants une inclination différente par rapport à l'axe longitudinal allant de la partie supérieure à la partie inférieure dudit corps profilé (12),
au moyen duquel les rayons infrarouges réfléchis par les susdites premières surfaces (22) ayant une inclination supérieure, par rapport à l'axe longitudinal du dispositif, à celle de la deuxième surface inférieure (24), donne des informations concernant une baisse du niveau de l'électrolyte au-dessous d'une valeur critique,
et les rayons infrarouges réfléchis par les susdites deuxièmes surfaces (24) ayant une inclination inférieure par rapport à l'axe longitudinal du dispositif, donne des informations concernant la concentration de l'acide.

2. Le dispositif conformément à la revendication 1, se **caractérise par le fait que** la susdite première surface supérieure (22) desdites portions (20, 20') du corps (12) forme, par rapport à l'axe longitudinal dudit corps (12), un angle apte à permettre un renvoi optimal au récepteur (18) du rayon incident sur ladite surface (22) lorsque ladite partie inférieure est immergée dans l'air, par contre le renvoi d'énergie devient pratiquement nul lorsque ladite partie inférieure est immergée dans un liquide ayant un index de réfraction supérieur à 1.

3. Le dispositif conformément à la revendication 2, se **caractérise par le fait que** la susdite deuxième surface inférieure (24) desdites partions (20, 20') du corps (12) forme, par rapport à l'axe longitudinal dudit corps, un angle tel que la portion de rayon incident sur ladite surface inférieure (24) et reçu par ledit récepteur (18) a une intensité variable de manière non équivoque en fonction de la densité de l'électrolyte.

4. Le dispositif conformément à la précédente revendication 3, se **caractérise par le fait que** les susdites deuxièmes surfaces inférieures (24) sont liées les unes aux autres par une surface de connexion droite (30) perpendiculaire à l'axe vertical du corps (12).

5. Le dispositif conformément à chacune des précédentes revendications 1 ou 2, se **caractérise par le fait que** les susdites deuxièmes surfaces inférieures (24) sont liées les unes aux autres par au moins une surface de connexion orientée symétriquement et convergente sur l'axe dudit corps (12).

6. Le dispositif conformément à chacune des précédentes revendications 1 ou 2, se **caractérise par le fait que** les susdites deuxièmes surfaces inférieures (24) sont liées les unes aux autres par deux surfaces de connexion (25, 26) inclinées symétriquement et convergentes sur l'axe dudit corps (12).

7. Le dispositif conformément à chacune des précédentes revendications, se **caractérise par le fait que** ledit corps (12) a une cavité qui s'étend longitudinalement (37) et un capteur de température (38) logé dans ladite cavité (37) à une hauteur inférieure à la susdite portion à facettes (20, 20') du corps (12), et connecté aux circuits électroniques (34).

8. Le dispositif conformément à chacune des précédentes revendications, se **caractérise par le fait que** ledit corps profilé (12) est en polycarbonate avec un index de réfraction supérieur à celui de l'électrolyte.

9. Le dispositif conformément à chacune des précédentes revendications, se **caractérise par le fait que** ledit corps (12) a une largeur égal ou inférieure au diamètre intérieur dudit bouchon (14) et une hauteur ou extension longitudinale telle que l'extrémité à facettes est immergée dans l'électrolyte de la batterie et le niveau minimum L dépasse la première surface inclinée supérieure (22).

10. Le dispositif conformément à la revendication 7, se **caractérise par le fait qu'**il comprend aussi un conditionneur (28), qui capte et élabore le signal en provenance du récepteur (18) ou du récepteur (18) et du capteur de température (38) et interagit avec un feeder (29) qui transmet ledit signal au dit émetteur (16).

11. Le dispositif conformément à chacune des précédentes revendications, se **caractérise par le fait que** ledit corps (12) est au moins partiellement entouré par une protection (36), constituée d'un filet de matériau fritté, partiellement séparée dudit corps, ladite protection étant fixée au dit bouchon (14).

12. Le dispositif conformément à chacune des précédentes revendications, se **caractérise par le fait qu'**il y a un revêtement ou un capuchon en fibres synthétiques au moins en correspondance de la partie inférieure dudit corps (12).

13. Le dispositif conformément à chacune des précédentes revendications, se **caractérise par le fait que** ledit émetteur de lumière (16) est situé dans le bouchon (14) en correspondance de l'extrémité supérieure dudit corps (12) le long d'une zone centrale-latérale, et que ledit récepteur (18) est positionné dans la zone centrale-latérale opposée par rapport à l'axe dudit bouchon (14), et que les terminaux électriques qui connectent ledit émetteur (16) et ledit capteur (18) au circuit électronique (34) sont fixés à la susdite partie supérieure dudit bouchon (14).

14. Le dispositif conformément à chacune des précédentes revendications, se **caractérise par le fait que** les signaux électriques reçus par le récepteur (18) et élaborés par le circuit électronique (34) sont envoyés dans les circuits électroniques du véhicule où la batterie à surveiller par voie optique et / ou acoustique pour la situation de l'alarme est installée.
